# NOUVEAU FASCICULE DE BREVET EUROPEEN

(11) **EP 1 685 636 B2**
(45) Date de publication et mention de la décision concernant l'opposition: **09.11.2022**
(45) Mention de la délivrance du brevet: 21.09.2016
(21) Numéro de dépôt: 04805483.7
(22) Date de dépôt: 18.11.2004
(51) Int. Cl.: H02J 7/00

(54) **OUTIL PORTATIF ÉLECTRIQUE AUTONOME DE PUISSANCE**
TRAGBARES SELBSTÄNDIGES ELEKTROWERKZEUG
PORTABLE SELF-CONTAINED ELECTRIC POWER TOOL

(30) Priorité: 20.11.2003 FR 0313608
(43) Date de publication de la demande: 02.08.2006
(73) Titulaire: PELLENC (Société Anonyme), 84120 Pertuis (FR)
(72) Inventeur: PELLENC, Roger, 84120 Pertuis (FR)
(74) Mandataire: Cabinet Nuss
(86) Numéro de dépôt international: PCT/FR2004/002946
(87) Numéro de publication internationale: WO 2005/053915

(56) Documents cités:
- EP-A- 0 291 131
- EP-A1- 0 310 717
- EP-A1- 0 920 062
- EP-A1- 1 217 710
- EP-A2- 1 363 379
- WO-A1-97/32383
- WO-A1-99/50946
- FR-A1- 2 744 852
- KR-A- 20030 062 549
- US-A- 5 773 159
- US-A- 5 898 294
- US-A- 5 929 657
- US-A- 6 087 815
- US-A- 6 091 224
- US-A1- 2001 052 758
- US-A1- 2002 145 406
- US-A1- 2003 096 158
- US-B1- 6 242 893
- US-B1- 6 254 832
- US-B1- 6 268 710
- US-B1- 6 268 713
- US-B1- 6 324 339
- US-B1- 6 373 152
- US-B1- 6 441 589
- Chatzakis J et al.: "Designing a New Generalized Battery Management System", IEEE Transactions on Industrial Electronics, vol. 50, no. 5, October 2003 (2003-10), pages 990-999,
- 'Dealing with In-Flight Lithium Battery Fires in Portable Electronics Devices', www.caa.co.uk, 2003-07-30
- Anonymous: "BL600 Lithium-lon Fast Charger - datasheet", Ault Incorporated Ault Incorporated, [retrieved on 2017-08-09]
- Norme International CEI 62133

## Description

La présente invention concerne le domaine des appareils et instruments à sources d'énergie autonomes, plus particulièrement les outils électroportatifs de puissance autonomes, et a pour objet un ensemble d'outil du type précité à batterie lithium-ion ou lithium polymère.

Dans la présente, on entend par "outil" de manière générale un appareil ou instrument apte à faciliter l'action physique d'un opérateur dans l'exécution d'une tâche matérielle ou à exécuter ladite tâche sous le contrôle de l'opérateur. Par ensemble d'outil, on entend un outil avec sa source d'énergie autonome et le moyen d'alimentation de cette dernière.

On peut citer comme outils déjà réalisés par la déposante : les sécateurs électroniques pour la taille des arbres fruitiers et de la vigne, les attacheurs de végétaux et les outils de récolte de fruits.

Peuvent également être cités, de façon non limitative, à titre d'outils du genre précité et réalisés suivant des technologies similaires : les scies à chaînes, les tondeuses à gazon portables à fil, les coupes haies, les marteaux piqueurs.

Ces outils électroportatifs de puissance se distinguent essentiellement des outils comparables actionnés par des sources d'énergie hydraulique, pneumatique ou électrique par le fait qu'ils sont autonomes et indépendants de toute source d'énergie extérieure, ce qui permet à l'opérateur d'être entièrement libre de ses mouvements. Ils se distinguent aussi des outils électroportatifs autonomes actionnés par moteur thermique, par l'absence de pollution, de mauvaises odeurs, de vibrations et de bruit durant leur fonctionnement et par leur fiabilité d'utilisation.

Il est démontré d'autre part que l'usage de ces outils engendre un confort d'utilisation sans précédent, de par leur silence et leur souplesse.

De tels outils électriques portatifs autonomes de puissance comprennent généralement au moins trois sous-ensembles fonctionnels distincts, à savoir un premier sous-ensemble formant actionneur électrique et générant l'action mécanique de l'outil, un deuxième sous-ensemble formant source d'énergie électrique et comprenant essentiellement une batterie électrochimique rechargeable et un troisième sous-ensemble formant chargeur apte à effectuer la recharge contrôlée de la batterie.

Un tel outil électrique portatif autonome de puissance est montré par le document EP291131.

L'avènement et le développement de ces outils sont principalement liés à deux facteurs techniques :
- d'une part, l'arrivée sur le marché de nouveaux types de batteries ayant un meilleur rapport capacité/poids,
- d'autre part, le développement des technologies des moteurs électriques à très haut rendement.

Les batteries actuellement utilisées sur les outils cités en exemple sont du type nickel cadmium ou du type nickel métal hydrure. Elles ont une capacité énergétique d'environ 30 à 50 Wattheures par kilo.

Sachant qu'un opérateur a, en accord notamment avec les recommandations officielles, une capacité de potage sur le dos, en bandoulière ou à la teinture, de 4 kg maximum pour un travail continu à la journée, on en déduit qu'avec les techniques actuelles nickel cadmium et nickel métal hydrure, la capacité totale de la batterie portée par l'opérateur sera comprise entre 150 et 200 Wattheures.

Cette capacité n'est pas suffisante pour procurer aux outils électroportatifs autonomes de puissance, l'énergie nécessaire pour travailler une demi-journée, ni a fortiori une journée continue. '

Il existe donc un besoin et une demande effective pour des batteries ayant un rapport capacité/poids plus performant, de façon à permettre d'étendre le champ d'application des outils électroportatifs autonomes de puissance, compte tenu de leurs avantages et qualités précités.

L'invention vise, dans ce but, à utiliser la technologie émergeante des batteries lithium-ion et lithium polymère dans le contexte des outils électroportatifs autonomes et de puissance.

En effet, bien que ces batteries soient actuellement fréquemment utilisées dans les téléphones mobiles, caméscopes et ordinateurs portables, elles ne sont pas encore utilisées dans les applications d'outils électroportatifs, notamment de puissance, compte tenu des difficultés rencontrées dans leur mise en oeuvre dans cette application. Or, elles offrent des rapports capacité/poids de 150 à 200 Wattheures par kilo, ce qui permettrait de tripler, voire de quadrupler la puissance ou la durée d'utilisation de ces outils électroportatifs, par rapport à leurs possibilités actuelles avec les batteries nickel cadmium ou nickel métal hydrure.

Il y a lieu de remarquer que, compte tenu de la demande en puissance, l'utilisation des batteries lithium-ion et lithium polymère dans l'application des outils électroportatifs de puissance nécessite la fourniture de tensions élevées.

En effet, les éléments lithium-ion et lithium polymère ne peuvent par nature délivrer un courant important et nécessitent de ce fait le couplage des éléments de base en série, de façon à obtenir des tensions élevées, permettant par ce biais la fourniture de puissances conséquentes malgré un faible courant.

Ainsi, pour la formation de batteries délivrant des puissances électriques adaptées à des applications dans les outils portatifs autonomes de puissance, tout en respectant la législation en vigueur en matière de tension d'utilisation et En fournissant des tensions de travail utiles, il y a lieu de réaliser des couplages série de nombreux éléments ou de nombreuses cellules, chacune de ces dernières regroupant de tels éléments en parallèle.

Il en résulte des difficultés importantes de commande et de contrôle de telles batteries à composants multiples, qui n'ont pas été résolues à ce jour.

En effet, dans les applications citées précédemment (téléphones mobiles, caméscopes et ordinateurs portables) les batteries comportent en général au plus quatre éléments associés en série, dont le contrôle en charge et en décharge est peu complexe et relativement aisé à mettre en oeuvre.

Le but de la présente invention est de trouver une solution au problème exposé ci-dessus.

A cet effet, la présente invention concerne un ensemble outil électrique portatif autonome de puissance selon la revendication 1.

La présente invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un ensemble d'outil selon l'invention, sous la forme d'un sécateur, pendant une phase de charge ;
la figure 2 est une vue en perspective de l'ensemble d'outil de la figure 1 lors d'une utilisation par un opérateur ;
la figure 3 est un schéma synoptique du second sous-ensemble fonctionnel faisant partie de l'ensemble d'outil, et,
la figure 4 est un schéma électronique de principe de certains éléments constitutifs du second sous-ensemble représenté sur la figure 3.

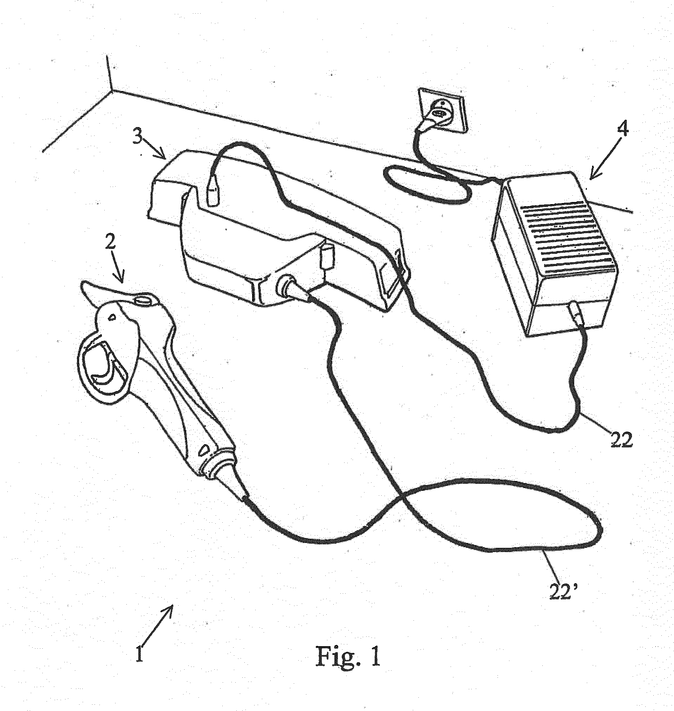

Comme le montrent les figures 1, 3 et 4, l'ensemble outil électrique portatif autonome de puissance 1 comprend au moins trois sous-ensembles fonctionnels distincts 2, 3 et 4, à savoir un premier sous-ensemble 2 formant actionneur électrique et générant l'action mécanique de l'outil, un deuxième sous-ensemble 3 formant source d'énergie électrique et comprenant essentiellement une batterie électrochimique rechargeable 5 et un troisième sous-ensemble 4 formant chargeur apte à effectuer la recharge contrôlée de la batterie 5.

Conformément à l'invention, le deuxième ou second sous-ensemble 3 est portable par l'opérateur et est constitué, d'une part, par une batterie électrochimique 5 lithium-ion ou lithium polymère formée par association de plus de quatre cellules 6 en série, chaque cellule étant composée d'un élément ou de plusieurs éléments en parallèle et, d'autre part, par un module 7 de contrôle et de commande de la batterie 5, préférentiellement sous la forme d'un dispositif électronique situé à proximité immédiate de ladite batterie 5 et assurant dans le temps et de manière contrôlée une capacité maximale de la batterie et une utilisation optimale de l'outil.

De plus, le premier sous-ensemble 2 est soumis durant son fonctionnement à un contrôle par un système 8 de limitation en courant adapté à préserver la batterie lithium-ion ou lithium polymère 5 dont il puise l'énergie et le troisième sous-ensemble 4 consiste au moins en une source d'alimentation électrique dont la tension et le courant sont adaptés à la recharge de la batterie lithium-ion ou lithium polymère 5.

En situant le module 7 à proximité immédiate de la batterie 5, les connexions et le câblage sont rendus plus aisés et les signaux de mesure et de commande moins exposés à des perturbations, des pertes ou des parasites et moins soumis à des dérives, du fait d'une distance de transmission réduite.

Le deuxième et le troisième sous-ensembles 3 et 4 peuvent se présenter sous la forme d'une unité unique intégrant lesdits deux sous-ensembles 3 et 4 ou sous la forme de deux modules physiques distincts, reliés entre eux durant les phases de charge.

Cette dernière variante de réalisation sera bien entendu privilégiée dans le cadre de la présente invention, pour réduire la charge à porter par l'utilisateur.

Selon l'invention, le module 7 de contrôle et de commande électronique de la batterie 5 du second sous-ensemble 3 se présente sous la forme d'une carte électronique et comprend au moins une unité de traitement numérique 9, telle que par exemple un microprocesseur, microcontrôleur, un processeur de signaux numériques, associée à une mémoire et à des circuits annexes, aptes ensemble à remplir toutes les tâches du groupe de tâches suivant formé par :
la gestion de la charge,
la gestion de la décharge,
l'équilibrage de la charge de chaque cellule 6,
l'évaluation et l'affichage de la capacité de la batterie 5,
la protection en décharge de la batterie 5 en surintensité pendant l'utilisation de l'outil,
la gestion de l'outil durant les phases d'entreposage,
la gestion des alarmes,
la gestion et la transmission des informations recueillies,
la gestion des diagnostics.

L'exécution de ces différentes tâches est déclenchée et pilotée par l'unité de traitement numérique 9 sous la commande et le contrôle d'un programme de gestion du fonctionnement de l'ensemble d'outil 1, en prenant en compte les commandés de l'utilisateur et les valeurs de différentes paramètres mesurées au niveau du deuxième sous-ensemble 3, ainsi qu'éventuellement au niveau du premier et/ou du troisième sous-ensemble(s) 2 et/ou 4.

En accord avec une première caractéristique de l'invention, et en vue de l'accomplissement des tâches de gestion de la charge, de gestion de la décharge, d'équilibrage de la charge de chaque cellule 6, d'évaluation et d'affichage de la capacité de la batterie 5, le module de contrôle et de commande 7 exploite en permanence les valeurs de mesure de la tension de chaque cellule 6 composant la batterie 5.

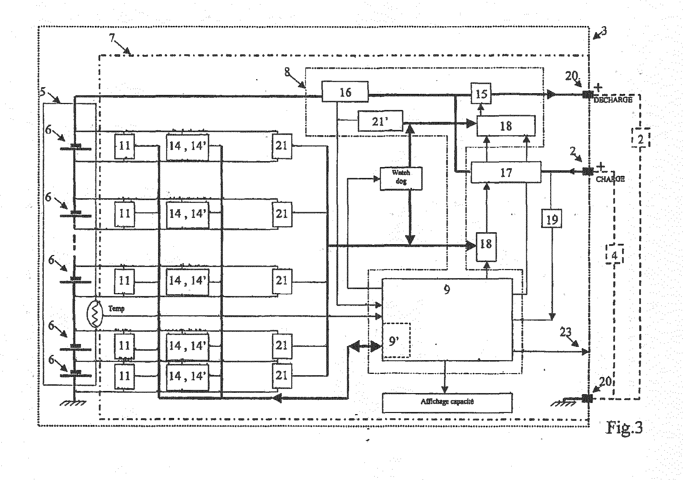

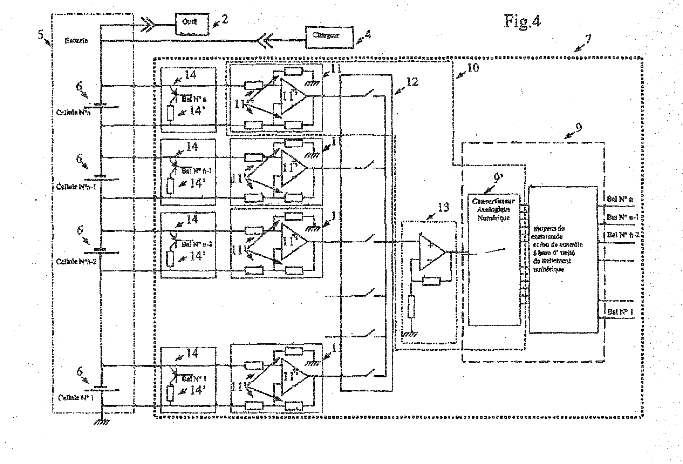

A cet effet, et comme le montrent les figures 3 et 4 des dessins annexés, l'invention prévoit que, pour une batterie 5 formée de n cellules 6 en série, les valeurs de mesure de la tension de chaque cellule 6 sont fournies par une chaîne électronique d'acquisition 10 constituée principalement de n modules analogiques 11 identiques, montés respectivement aux bornes des n cellules 6 de la batterie 5 et aptes à mesurer la tension de la cellule 6 respectivement correspondante, les valeurs de tensions mesurées par chacun des n modules 11 étant ensuite acheminées, l'une après l'autre, par l'intermédiaire d'au moins un multiplexeur analogique 12 et après amplification par un circuit adapté 13 vers un convertisseur analogique/numérique d'entrée 9' de l'unité de traitement numérique 9 faisant partie du module 7 de contrôle et de commande.

Le convertisseur 9' pourra soit être intégré à l'unité 9, soit former un circuit séparé de cette dernière.

Par l'intermédiaire de cette chaîne électronique d'acquisition 10, le module de commande et de contrôle 7 effectue une scrutation séquentielle ou cyclique des tensions des différentes cellules 6, provoquant un rafraî-chissement à grande fréquence des données de tension pour chaque cellule 6 disponible au niveau de l'unité 9, permettant ainsi une prise en compte et une réaction rapides suite à l'occurrence d'une valeur de mesure de tension anormale.

Comme le montre la figure 4 des dessins annexés, les modules analogiques 11 de mesure de tensions réalisent respectivement pour chaque cellule 6 une soustraction entre la tension mesurée à sa borne positive et la tension mesurée à sa borne négative, ce par l'intermédiaire d'un montage électronique différentiel à amplificateur opérationnel 11' utilisant des résistances 11" ou des éléments résistifs d'entrée.

En vue d'aboutir à une sensibilité de mesure adaptée à un contrôle sûr et précis de chaque cellule 6, le montage électronique en différentiel à amplificateur opérationnel 11' de chaque module de mesure de tension 11 comporte des résistances ou des éléments résistifs d'entrée 11" d'impédance proche ou supérieure à 1 Mohm, de façon à obtenir des courants de fuite très faibles et par exemple, mais non limitativement, inférieurs à 1/20000^{ème} par heure de la capacité totale de la batterie 5, les valeurs de mesure de la tension de chaque cellule 6 étant préférentiellement délivrées avec une précision de mesure d'au moins 50 mV.

De manière avantageuse, la précision de mesure de la tension souhaitée, c'est-à-dire avantageusement d'au moins 50 mV, est obtenue par étalonnage lors de la fabrication de la carte électronique du module contrôle et de commande de la batterie 7, permettant de compenser individuellement les erreurs de mesure de tension analogique 11.

Cet étalonnage peut, par exemple, consister à introduire par programmation dans l'unité de traitement numérique 9, pour chaque module de mesure de tension 11, des paramètres correcteurs d'erreurs fonction de la mesure d'une ou de plusieurs tensions de référence très précises, que l'on substitue pour cette opération d'étalonnage aux tensions normalement mesurées aux bornes de chaque cellule 6.

Afin de permettre de délivrer à l'unité 9 un signal de mesure avec la précision requise, le convertisseur analogique/numérique 9' fournira au moins dix bits significatifs en sortie.

Conformément à une autre caractéristique de l'invention, la tâche d'équilibrage de la charge des cellules 6 les unes par rapport aux autres est gérée par l'unité de traitement numérique 9 qui commande sur la base des valeurs de mesure de tension de chaque cellule 6, et si nécessaire pour chacune d'entre d'elles, l'évolution du courant de charge par l'intermédiaire de circuits dissipateurs à base de commutateurs électroniques 14 associés à des éléments résistifs 14'.

Le procédé mis en oeuvre pour réaliser une charge équilibrée de la batterie 5 peut par exemple être celui décrit dans la demande de brevet français n° 03 13570 déposée le 20 novembre 2003 par la demanderesse de la présente.

En accord avec une autre caractéristique de l'invention, la tâche de gestion de la décharge consiste à scruter en permanence les données de la tension de chaque cellule 6 par l'intermédiaire de l'unité de traitement numérique 9, à interrompre la décharge lorsque celle-ci détecte qu'une de ces tensions de cellule 6 a atteint le seuil de décharge minimum préconisé par le fabricant d'éléments lithium-ion ou lithium polymère et à couper la décharge en désactivant le composant 15 de commutation de la décharge, conduisant ainsi à l'arrêt de l'outil 2 et en activant par exemple, non limitativement, un avertisseur sonore ou visuel.

Comme le montrent les figures 3 et 4 des dessins annexés, et conformément à une autre caractéristique encore de l'invention, les tâches de gestion de la charge, d'évaluation et d'affichage de la capacité de la batterie 5 et de protection en surintensité durant la décharge sont gérées en continu par l'unité de traitement numérique 9 grâce à un circuit électronique analogique 16 de mesure du courant de charge et de décharge de la batterie 5.

Avantageusement, durant la tâche de gestion de la charge, alors que le troisième sous-ensemble formant chargeur 4 est connecté au deuxième sous-ensemble 3 au niveau de la carte électronique du module de contrôle et de commande 7 de la batterie 5, la fin de la charge est obtenue par ouverture du composant de commutation de la charge 17 qui est commandé par l'unité de traitement numérique 9 lorsque, d'une part, ladite unité 9 détecte par l'intermédiaire du circuit électronique analogique 16 de mesure du courant de charge et de décharge une chute du courant de charge jusqu'à un seuil préconisé, par exemple de 50 mA, pour la batterie 5 ou que, d'autre part, la température due la batterie 5 dépasse une valeur limite autorisée, par exemple 55°C, ou encore que la charge se prolonge pendant un temps supérieur à une fraction donnée du temps théorique de charge, par exemple environ 20 %.

En outre, la tâche d'évaluation et d'affichage de la capacité de la batterie 5 est gérée par l'unité de traitement numérique 9, cette dernière calculant ladite capacité en prenant en compte en permanence, pendant la charge et pendant l'utilisation de l'outil, d'une part, l'information du courant instantané de charge et de décharge de la batterie 5 délivrée par le circuit électronique analogique de mesure du courant de charge et décharge 16 et, d'autre part, les valeurs de mesure de tension de chaque cellule 6 et, non obligatoirement mais pour un calcul plus précis, leur résistance interne moyenne connue.

La tâche de protection en surintensité pendant la décharge de la batterie 5 lors de l'utilisation de l'outil, destinée à préserver la batterie lithium-ion ou lithium polymère d'un vieillissement prématuré ou d'un échauffement exagéré, consiste soit à couper le courant de décharge en cas de dépassement impulsionnel très important du courant maximum de décharge admis pour la batterie 5 ou de dépassement de la température maximum limite autorisée pour celle-ci, soit à limiter le courant de décharge en fonction de l'énergie consommée par l'outil pendant un certain temps glissant, sachant que la valeur de l'énergie et le temps glissant sont prédéterminés expérimentalement en fonction de l'outil, de son utilisation et de la durée de vie recherchée pour la batterie 5 lithium-ion ou lithium polymère faisant partie du second sous-ensemble 3.

En accord avec une variante de réalisation préférée, la limitation de courant de décharge est gérée par l'unité de traitement numérique 9 en appliquant une commande en modulation de largeur d'impulsion (MLI), générée soit directement par ladite unité 9, soit par un composant spécialisé, au travers d'un étage de pilotage 18, au composant de commutation de la décharge 15 réalisé par exemple sous la forme d'un composant du type Mosfet canal N.

En vue d'aboutir automatiquement à des conditions de stockage optimisées, il est prévu que, lorsque l'ensemble d'outil électrique 1 n'est pas en charge et qu'il n'a pas été utilisé pendant une durée donnée, par exemple 10 jours, l'unité de traitement numérique 9 engage automatiquement une tache de gestion de l'entreposage qui consiste à vérifier si la capacité résiduelle de la batterie 5 est supérieure ou non à la capacité de stockage préconisée par le fabricant d'éléments lithium-ion ou lithium polymère et, si la capacité résiduelle est bien supérieure à la capacité de stockage, à déclencher par l'unité de traitement numérique 9 une décharge automatique de la batterie à l'aide de circuits résistifs 14' connectés en parallèle sur chaque cellule 6, ce jusqu'à ce que la capacité de stockage soit atteinte, et dès lors à arrêter tous les circuits électroniques tout en mettant l'unité de traitement 9 en veille en mode faible consommation et, si la capacité est inférieure à la capacité de stockage, à faire déclencher par l'unité de traitement numérique 9 une alarme sonore et/ou visuelle.

De manière avantageuse, l'unité de traitement numérique 9 et apte à détecter la connexion du chargeur 4 sous tension à la batterie 5 par l'intermédiaire d'une mesure de tension par le module de contrôle et de commande 7 à l'une au moins des bornes 20, préférentiellement une borne positive, du second sous-ensemble 3 destinées à être connectées audit chargeur 4.

Cette fonction, éventuellement réalisée au moyen d'un circuit de mesure 19 particulier adapté, permet, tant que l'outil est stocké en phase de non utilisation, en détectant l'instant auquel au moins une cellule 6 a atteint la tension minimum préconisée par le fabricant, de déclencher ainsi une recharge automatique de la batterie 5.

Lorsque le module de contrôle et de commande 7 détecte une tension du chargeur 4 excessive ou insuffisante au niveau des bornes de connexion 20 correspondantes du second sous-ensemble 3, l'unité de traitement numérique 9 qui exploite cette information commande l'arrêt de la charge et déclenche une alarme sonore et/ou visuelle.

On notera que la paire de bornes 20 de connexion au chargeur 4 et la paire de bornes 20 de connexion à l'outil 2 présentent une borne négative commune reliée à la masse, mais des bornes positives distinctes, à chacune desquelles est couplé un composant de commutation 15 ou 17 correspondant.

Pour faciliter le contrôle à long terme de l'utilisation de l'ensemble d'outil 1, ainsi que sa maintenance et la planification de son suivi technique, la tâche de gestion des informations et des diagnostics peut consister à emmagasiner dans la mémoire de l'unité de traitement numérique 9 des informations acquises pendant l'utilisation de l'outil telles que par exemple : le nombre de recharges, la comptabilisation des heures d'utilisation de l'outil, l'évolution de la capacité de la batterie 5 dans le temps, l'énergie moyenne consommée par l'outil ou analogues, ces informations pouvant être transmises par l'intermédiaire d'une liaison 23 filaire, radiofréquence ou infrarouge vers un terminal d'exploitation séparé, par exemple du type ordinateur personnel, assistant personnel électronique, GSM, pouvant éventuellement-être relié au réseau Internet.

En vue d'optimiser l'intégration des moyens de commande et de contrôle de l'ensemble d'outil 1, le module de contrôle et de commande 7 de la batterie 5 faisant partie du second sous-ensemble 3 formant source d'énergie électrique rechargeable peut être associé au module de contrôle et de commande électronique de l'actionneur 2 sur la même carte électronique, le cas échéant avec utilisation de la même unité de traitement numérique 9.

Le circuit numérique 9 comprendra également un moyen 24 de contrôle du déroulement du programme de gestion de l'ensemble d'outil 1 et d'acquisition ordonnée des valeurs de mesure, représenté de manière symbolique sur la figure 3.

Des moyens de commande et de contrôle de l'actionneur 2 sont déjà connus en tant que tels et ne seront pas décrits davantage dans la présente.

Afin de fournir des sécurités supplémentaires, permettant de protéger les cellules 6 de la batterie 5 dans des cas d'exposition de ces cellules à des conditions extrêmes de tension ou de courant, des circuits additionnels de coupure de la connexion du deuxième sous-ensemble 3 avec le premier ou le troisième sous-ensemble 2 ou 4 peuvent être prévus, en parallèle au système de contrôle normal précité construit autour de l'unité de traitement numérique 9.

Ainsi, le module de contrôle et de commande électronique 7 de la batterie 5 peut comporter pour chaque cellule 6 des circuits redondants de sécurité d'arrêt de charge 21, aptes à commander chacun individuellement, en cas de surtension d'une cellule 6, l'arrêt général de la charge en désactivant directement le composant 17 de commutation de la charge sans solliciter l'unité de traitement numérique 9.

De même, le module de contrôle et de commande électronique 7 peut comporter un circuit redondant d'arrêt de décharge 21', apte à commander l'arrêt de la décharge en cas de détection d'un courant de décharge égal ou supérieur à une valeur maximale admissible pour la batterie 5 par le circuit électronique analogique de mesure 16, en désactivant directement le composant 15 de commutation de la décharge sans solliciter l'unité de traitement numérique 9.

Préférentiellement, le troisième sous-ensemble 4 formant chargeur adapté à la recharge de la batterie 5 lithium-ion ou lithium polymère génère une tension avec une précision proche de 0,5 % et un courant régulé, obtenus au moyen d'un circuit spécialisé de régulation de tension et de courant. De tels circuits sont déjà connus en tant que tels et ne nécessitent pas de description supplémentaire.

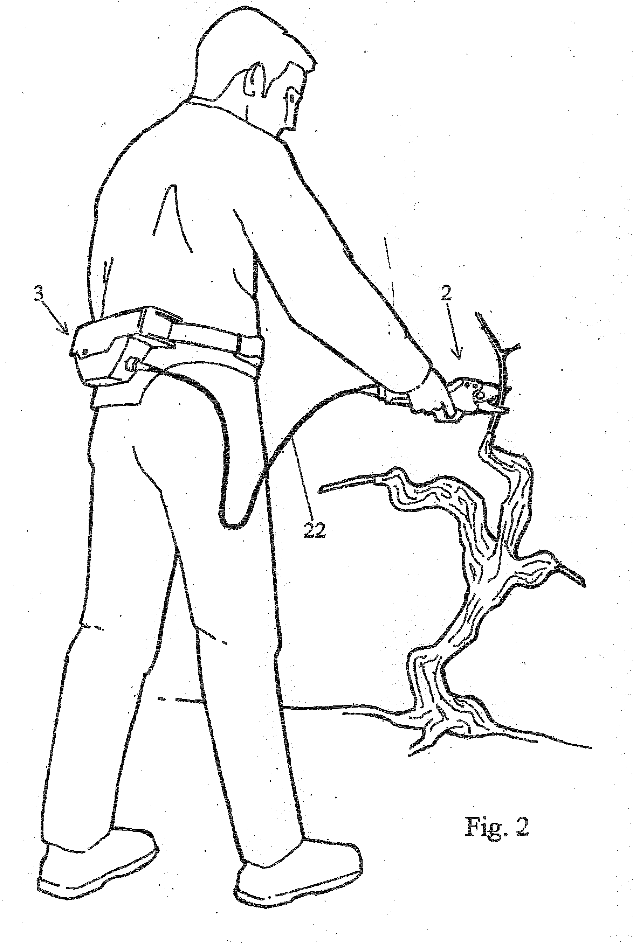

Comme le montrent les figures 1 et 2 des dessins annexés, chaque sous-ensemble fonctionnel 2, 3 et 4 est monté (lorsque les sous-ensembles 3 et 4 sont distincts) dans un boîtier de protection et/ou de préhension propre, pouvant être reliés entre eux deux à deux par des câbles flexibles déconnectables 22, 22' pour le transfert d'énergie et la transmission des signaux de commande et/ou de contrôle entre lesdits sous-ensembles 2, 3, 4.

On notera que la charge de la batterie 5 peut être effectuée avec le câble 22' reliant entre eux les sous-ensembles 2 et 3 ou non.

Le boîtier renfermant le premier sous-ensemble 2 portera également l'outil et sera conformé, au niveau d'une partie ou moins, de manière ergonomique pour autoriser une préhension aisée, sure et confortable de la part de l'utilisateur.

En outre, les boutons ou organes de commande analogues, ainsi que les moyens d'affichage et d'avertissement sonore et/ou lumineux, sont préférentiellement présents en partie au niveau du boîtier du premier sous-ensemble 2 et en partie au niveau du boîtier du deuxième sous-ensemble 3, en fonction de leur type et de la nécessité de pouvoir être accessibles par l'opérateur durant l'utilisation effective de l'ensemble d'outil 1.

Bien entendu, l'invention n'est pas limitée au mode de 1 réalisation décrit et représenté aux dessins annexés. Des modifications restent possibles, notamment du point de vue de la constitution des divers éléments ou par substitution d'équivalents techniques, sans sortir pour autant du domaine de protection de l'invention, donné par l'ensemble des revendications.

## Revendications

1. Ensemble d'outil électrique portatif autonome de puissance tel que par exemple sécateur, scie à chaîne, outil de récolte de fruits, tondeuses à gazon à fils, marteau piqueur ou analogue, comprenant au moins trois sous-ensembles fonctionnels distincts, à savoir un premier sous-ensemble formant actionneur électrique et générant l'action mécanique de l'outil, un deuxième sous-ensemble portable par l'utilisateur, formant source d'énergie électrique et comprenant essentiellement une batterie électrochimique rechargeable et un troisième sous-ensemble formant chargeur apte à effectuer la recharge contrôlée de la batterie, **caractérisé en ce que** :
le deuxième sous-ensemble (3) est constitué, d'une part, par une batterie électrochimique (5) lithium-ion ou lithium polymère formée par association de plus de quatre cellules (6) en série, chaque cellule étant composée d'un élément ou de plusieurs éléments en parallèle et, d'autre part, par un module (7) de contrôle et de commande de la batterie (5), assurant dans le temps et de manière contrôlée une capacité maximale de la batterie et une utilisation optimale de l'outil ;
le premier sous-ensemble (2) est soumis durant son fonctionnement à un contrôle par un système (8) de limitation en courant adapté à préserver la batterie électrochimique (5) lithium-ion ou lithium polymère (5) dont il puise l'énergie ;
le troisième sous-ensemble (4) consiste au moins en une source d'alimentation électrique dont la tension et le courant sont adaptés à la recharge de la batterie lithium-ion ou lithium polymère (5), le module (7) de contrôle et de commande électronique de la batterie (5) du second sous-ensemble (3) se présentant sous la forme d'une carte électronique et comprenant au moins une unité de traitement numérique (9), associée à une mémoire et à des circuits annexes, aptes ensemble à remplir toutes les tâches du groupe de tâches suivant formé par :
la gestion de la charge,
la gestion de la décharge,
l'équilibrage de la charge de chaque cellule (6),
l'évaluation et l'affichage de la capacité de la batterie (5),
la protection en décharge de la batterie (5) en surintensité pendant l'utilisation de l'outil,
la gestion de l'outil durant les phases d'entreposage,
la gestion des alarmes,
la gestion et la transmission des informations recueillies,
la gestion des diagnostics, et
l'unité de traitement numérique (9) engage automatiquement, lorsque l'ensemble d'outil électrique n'est pas en charge et qu'il n'a pas été utilisé pendant une durée donnée, par exemple 10 jours, une tâche de gestion de l'entreposage qui consiste à vérifier si la capacité résiduelle de la batterie (5) est supérieure ou non à la capacité de stockage préconisée par le fabricant d'éléments lithium-ion ou lithium polymère et, si la capacité résiduelle est bien supérieure à la capacité de stockage, à déclencher par l'unité de traitement numérique (9) une décharge automatique de la batterie à l'aide de circuits résistifs (14, 14') connectés en parallèle sur chaque cellule (6), ce jusqu'à ce que la capacité de stockage soit atteinte, et dès lors à arrêter tous les circuits électroniques tout en mettant l'unité de traitement (9) en veille en mode faible consommation et, si la capacité est inférieure à la capacité de stockage, à faire déclencher par l'unité de traitement numérique (9) une alarme sonore et/ou visuelle.

2. Ensemble d'outil électrique selon la revendication 1, **caractérisé en ce que** le module (7) est situé à proximité immédiate de la batterie (5) et **en ce que** l'unité de traitement (9) consiste en un microprocesseur, un microcontrôleur ou un processeur de signaux numériques.

3. Ensemble d'outil électrique selon la revendication 1, **caractérisé en ce que**, en vue de l'accomplissement des tâches de gestion de la charge, de gestion de la décharge, d'équilibrage de la charge de chaque cellule (6), d'évaluation et d'affichage de la capacité de la batterie (5), le module de contrôle et de commande (7) exploite en permanence les valeurs de mesure de la tension de chaque cellule (6) composant la batterie (5).

4. Ensemble d'outil électrique selon la revendication 3, **caractérisé en ce que**, pour une batterie (5) formée de n cellules (6) en série, les valeurs de mesure de la tension de chaque cellule (6) sont fournies par une chaîne électronique d'acquisition (10) constituée principalement de n modules analogiques (11) identiques, montés respectivement aux bornes des n cellules (6) de la batterie (5) et aptes à mesurer la tension de la cellule (6) respectivement correspondante, les valeurs de tensions mesurées par chacun des n modules (11) étant ensuite acheminées, l'une après l'autre, par l'intermédiaire d'au moins un multiplexeur analogique (12) et après amplification par un circuit adapté (13) vers un convertisseur analogique/numérique d'entrée (9') de l'unité de traitement numérique (9) faisant partie du module (7) de contrôle et de commande.

5. Ensemble d'outil électrique selon la revendication 4, **caractérisé en ce que** les modules analogiques (11) de mesure de tension réalisent respectivement pour chaque cellule (6) une soustraction entre la tension mesurée à sa borne positive et la tension mesurée à sa borne négative, ce par l'intermédiaire d'un montage électronique différentiel à amplificateur opérationnel (11') utilisant des résistances (11") ou des éléments résistifs d'entrée.

6. Ensemble d'outil électrique selon la revendication 5, **caractérisé en ce que** le montage électronique en différentiel à amplificateur opérationnel (11') de chaque module de mesure de tension (11) comporte des résistances ou des éléments résistifs d'entrée (11") d'impédance proche ou supérieure à 1 Mohm, de façon à obtenir des courants de fuite très faibles et par exemple inférieurs à 1/20000^{ème} par heure de la capacité totale de la batterie (5).

7. Ensemble d'outil électrique selon les revendications 3 à 6, **caractérisé en ce que** les valeurs de mesure de la tension de chaque cellule (6) sont délivrées avec une précision de mesure d'au moins 50 mV.

8. Ensemble d'outil électrique selon la revendication 7, **caractérisé en ce que** la précision de mesure de la tension d'au moins 50 mV est obtenue par étalonnage lors de la fabrication de la carte électronique du module contrôle et de commande de la batterie (7).

9. Ensemble d'outil électrique selon la revendication 8, **caractérisé en ce que** l'étalonnage lors de la fabrication de la carte électronique consiste à introduire par programmation dans l'unité de traitement numérique (9), pour chaque module de mesure de tension (11), des paramètres correcteurs d'erreurs fonction de la mesure d'une ou de plusieurs tensions de référence très précises, que l'on substitue pour cette opération d'étalonnage aux tensions normalement mesurées aux bornes de chaque cellule (6).

10. Ensemble d'outil électrique selon l'une quelconque des revendications 1 à 9, **caractérisé en ce que** la tâche d'équilibrage de la charge des cellules (6) les unes par rapport aux autres est gérée par l'unité de traitement numérique (9) qui commande sur la base des valeurs de mesure de tension de chaque cellule (6), et si nécessaire pour chacune d'entre d'elles, l'évolution du courant de charge par l'intermédiaire de circuits dissipateurs à base de commutateurs électroniques (14) associés à des éléments résistifs (14').

11. Ensemble d'outil électrique selon l'une quelconque des revendications 1 à 10, **caractérisé en ce que** la tâche de gestion de la décharge consiste à scruter en permanence les données de la tension de chaque cellule (6) par l'intermédiaire de l'unité de traitement numérique (9), à interrompre la décharge lorsque celle-ci détecte qu'une de ces tensions de cellule (6) a atteint le seuil de décharge minimum préconisé par le fabricant d'éléments lithium-ion ou lithium polymère et à couper la décharge en désactivant un composant (15) de commutation de la décharge, conduisant ainsi à l'arrêt de l'outil (2) et en activant, par exemple, un avertisseur sonore ou visuel.

12. Ensemble d'outil électrique selon l'une quelconque des revendications 1 à 11, **caractérisé en ce que** les tâches de gestion de la charge, d'évaluation et d'affichage de la capacité de la batterie (5) et de protection en surintensité durant la décharge sont gérées en continu par l'unité de traitement numérique (9) grâce à un circuit électronique analogique (16) de mesure du courant de charge et de décharge de la batterie (5).

13. Ensemble d'outil électrique selon la revendication 12, **caractérisé en ce que** durant la tâche de gestion de la charge, alors que le troisième sous-ensemble formant chargeur (4) est connecté au deuxième sous-ensemble (3) au niveau de la carte électronique du module de contrôle et de commande (7) de la batterie (5), la fin de la charge est obtenue par ouverture d'un composant de commutation de la charge (17) qui est commandé par l'unité de traitement numérique (9) lorsque, d'une part, ladite unité (9) détecte par l'intermédiaire du circuit électronique analogique (16) de mesure du courant de charge et de décharge une chute du courant de charge jusqu'à un seuil préconisé, par exemple de 50 mA, pour la batterie (5) ou que, d'autre part, la température de la batterie (5) dépasse une valeur limite autorisée, par exemple 55°C, ou encore que la charge se prolonge pendant un temps supérieur à une fraction donnée du temps théorique de charge, par exemple environ 20 %.

14. Ensemble d'outil électrique selon la revendication 12, pour autant qu'elle se rattache à l'une des revendications 3 à 9, **caractérisé en ce que** la tâche d'évaluation et d'affichage de la capacité de la batterie (5) est gérée par l'unité de traitement numérique (9), cette dernière calculant ladite capacité en prenant en compte en permanence, pendant la charge et pendant l'utilisation de l'outil, d'une part, l'information du courant instantané de charge et de décharge de la batterie (5) délivrée par le circuit électronique analogique de mesure du courant de charge et décharge (16) et, d'autre part, les valeurs de mesure de tension de chaque cellule (6) et, non obligatoirement mais pour un calcul plus précis, leur résistance interne moyenne connue.

15. Ensemble d'outil électrique selon l'une quelconque des revendications 1 à 14, **caractérisé en ce que** la tâche de protection en surintensité pendant la décharge de la batterie (5) lors de l'utilisation de l'outil, destinée à préserver la batterie lithium-ion ou lithium polymère d'un vieillissement prématuré ou d'un échauffement exagéré, consiste soit à couper le courant de décharge en cas de dépassement impulsionnel très important du courant maximum de décharge admis pour la batterie (5) ou de dépassement de la température maximum limite autorisée pour celle-ci, soit à limiter le courant de décharge en fonction de l'énergie consommée par l'outil pendant un certain temps glissant, sachant que la valeur de l'énergie et le temps glissant sont prédéterminés expérimentalement en fonction de l'outil, de son utilisation et de la durée de vie recherchée pour la batterie (5) lithium-ion ou lithium polymère faisant partie du second sous-ensemble (3).

16. Ensemble d'outil électrique selon la revendication 15, **caractérisé en ce que** la limitation de courant de décharge est gérée par l'unité (9) de traitement numérique en appliquant une commande en modulation de largeur d'impulsion (MLI), générée soit directement par ladite unité (9), soit par un composant spécialisé, au travers d'un étage de pilotage (18), à un composant de commutation de la décharge (15) réalisé par exemple sous la forme d'un composant du type Mosfet canal N.

17. Ensemble d'outil électrique selon l'une quelconque des revendications 1 à 16, **caractérisé en ce que** l'unité de traitement numérique (9) est apte à détecter la connexion du chargeur (4) sous tension à la batterie (5) par l'intermédiaire d'une mesure de tension par le module de contrôle et de commande (7) à l'une au moins des bornes (20) du second sous-ensemble (3) destinées à être connectées audit chargeur (4).

18. Ensemble d'outil électrique selon la revendication 17, **caractérisé en ce que** la fonction de détection de la connexion du chargeur (4) sous tension à la batterie (5) est réalisée au moyen d'un circuit de mesure (19) particulier adapté, permettant, tant que l'outil est stocké en phase de non utilisation, en détectant l'instant auquel au moins une cellule (6) a atteint la tension minimum préconisée par le fabricant, de déclencher ainsi une recharge automatique de la batterie (5).

19. Ensemble d'outil électrique selon la revendication 17 ou 18, **caractérisé en ce que** lorsque le module de contrôle et de commande (7) détecte une tension du chargeur (4) excessive ou insuffisante au niveau des bornes de connexion (20) correspondantes du second sous-ensemble (3), l'unité de traitement numérique (9) qui exploite cette information commande l'arrêt de la charge et déclenche une alarme sonore et/ou visuelle.

20. Ensemble d'outil électrique selon l'une quelconque des revendications 1 à 19, **caractérisé en ce que** la tâche de gestion des informations et des diagnostics consiste à emmagasiner dans la mémoire de l'unité de traitement numérique (9) des informations acquises pendant l'utilisation de l'outil telles que par exemple : le nombre de recharges, la comptabilisation des heures d'utilisation de l'outil, l'évolution de la capacité de la batterie (5) dans le temps, l'énergie moyenne consommée par l'outil ou analogues, ces informations pouvant être transmises par l'intermédiaire d'une liaison (23) filaire, radiofréquence ou infrarouge vers un terminal d'exploitation séparé, par exemple du type ordinateur personnel, assistant personnel électronique, GSM, pouvant éventuellement être relié au réseau Internet.

21. Ensemble d'outil électrique selon l'une quelconque des revendications 1 à 20, **caractérisé en ce que** le module de contrôle et de commande (7) de la batterie (5) faisant partie du second sous-ensemble (3) formant source d'énergie électrique rechargeable est associé au module de contrôle et de commande électronique de l'actionneur (2) sur la même carte électronique, le cas échéant avec utilisation de la même unité de traitement numérique (9).

22. Ensemble d'outil électrique selon l'une quelconque des revendications 1 à 20, **caractérisé en ce que** le module de contrôle et de commande électronique (7) de la batterie (5) comporte pour chaque cellule (6) des circuits redondants de sécurité d'arrêt de charge (21), aptes à commander chacun individuellement, en cas de surtension d'une cellule (6), l'arrêt général de la charge en désactivant directement un composant (17) de commutation de la charge sans solliciter l'unité de traitement numérique (9).

23. Ensemble d'outil électrique selon la revendication 12 ou l'une quelconque des revendications 13 à 22 pour autant qu'elle se rattache à la revendication 12, **caractérisé en ce que** le module de contrôle et de commande électronique (7) comporte un circuit redondant d'arrêt de décharge (21'), apte à commander l'arrêt de la décharge en cas de détection d'un courant de décharge égal ou supérieur à une valeur maximale admissible pour la batterie (5) par le circuit électronique analogique de mesure (16), en désactivant directement le composant (15) de commutation de la décharge sans solliciter l'unité de traitement numérique (9).

24. Ensemble d'outil électrique selon l'une quelconque des revendications 1 à 23, **caractérisé en ce que** le troisième sous-ensemble (4) formant chargeur adapté à la recharge de la batterie (5) lithium-ion ou lithium polymère génère une tension avec une précision proche de 0,5 % et un courant régulé, obtenus au moyen d'un circuit spécialisé de régulation de tension et de courant.

25. Ensemble d'outil électrique selon l'une quelconque des revendications 1 à 24, **caractérisé en ce que** chaque sous-ensemble fonctionnel (2, 3 et 4) est monté dans un boîtier de protection et/ou de préhension propre, pouvant être reliés entre eux deux à deux par des câbles flexibles déconnectables (22, 22') pour le transfert d'énergie et la transmission des signaux de commande et/ou de contrôle entre lesdits sous-ensembles (2, 3, 4).

## Patentansprüche

1. Autonome tragbare Kraft-Elektrowerkzeugeinheit, wie zum Beispiel Schere, Kettensäge, Obsterntewerkzeug, elektrischer Rasenmäher, Pickhammer oder Ähnliches, die mindestens drei getrennte Funktionsuntereinheiten umfasst, nämlich eine erste Untereinheit, die einen elektrischen Betätiger bildet und die mechanische Aktion des Werkzeugs erzeugt, eine zweite Untereinheit, die vom Benutzer getragen werden kann, die eine Stromquelle bildet und im Wesentlichen einen aufladbaren elektrochemischen Akkumulator umfasst, und eine dritte Untereinheit, die einen Auflader bildet, der geeignet ist, um das gesteuerte Aufladen des Akkumulators auszuführen, **dadurch gekennzeichnet dass**:
die zweite Untereinheit (3) einerseits aus einem elektrochemischen Lithium-Ionen- oder Lithium-Polymer-Akkumulator (5) gebildet ist, der durch Assoziation von mehr als vier Zellen (6) in Serie gebildet ist, wobei jede Zelle aus einem oder mehreren parallel geschalteten Elementen besteht, und andererseits aus einem Steuer- und Befehlsmodul (7) des Akkumulators (5) gebildet ist, das zeitlich und auf gesteuerte Art eine maximale Kapazität des Akkumulators und eine optimale Verwendung des Werkzeugs sicherstellt,
die erste Untereinheit (2) während ihres Betriebs einer Steuerung durch ein Strombegrenzungssystem (8) unterliegt, das dazu ausgebildet ist, den elektrochemischen Lithium-Ionen- oder Lithium-Polymer-Akkumulator (5), aus dem sie Energie schöpft, zu schützen,
die dritte Untereinheit (4) aus mindestens einer Stromversorgungsquelle besteht, deren Spannung und Stromstärke an das Aufladen des Lithium-Ionen- oder Lithium-Polymer-Akkumulators (5) angepasst sind, das elektronische Steuer- und Befehlsmodul (7) des Akkumulators (5) der zweiten Untereinheit (3) die Form einer Elektronikkarte hat und mindestens eine digitale Verarbeitungseinheit (9) umfasst, die mit einem Speicher und Hilfsschaltkreisen assoziiert ist, die gemeinsam geeignet sind, alle Aufgaben der Aufgabengruppe auszuführen, die aus Folgenden besteht:
Verwaltung des Ladens,
Verwaltung des Entladens,
Ausgleichen der Ladung jeder Zelle (6),
Beurteilen und Anzeigen der Kapazität des Akkumulators (5),
Entladeschutz des Akkumulators (5) bei Überstrom während der Verwendung des Werkzeugs,
Verwaltung des Werkzeugs während der Lagerphasen,
Verwaltung von Alarmen,
Verwaltung und Übertragung gesammelter Informationen,
Verwaltung von Diagnosen und
die digitale Verarbeitungseinheit (9), wenn die Elektrowerkzeugeinheit nicht geladen wird und während einer gegebenen Dauer, zum Beispiel 10 Tage, nicht verwendet wurde, automatisch eine Verwaltungsaufgabe des Lagerns aktiviert, die darin besteht zu prüfen, ob die Restkapazität des Akkumulators (5) größer ist als die Speicherkapazität, die von dem Hersteller von Lithium-Ionen- oder Lithium-Polymer-Elementen empfohlen wird, oder nicht, und, falls die Restkapazität viel höher ist als die Speicherkapazität, durch die digitale Verarbeitungseinheit (9) ein automatisches Entladen des Akkumulators mit Hilfe von Widerstandsschaltungen (14, 14'), die an jeder Zelle (6) parallel geschaltet sind, auszulösen, bis die Speicherkapazität erreicht ist, und dann alle Elektronikschaltungen zu stoppen, während die Verarbeitungseinheit (9) auf Standbymodus mit geringem Verbrauch gestellt wird, und, falls die Kapazität niedriger ist als die Speicherkapazität, von der digitalen Verarbeitungseinheit (9) einen akustischen und/oder visuellen Alarm auslösen zu lassen.

2. Elektrowerkzeugeinheit nach Anspruch 1, **dadurch gekennzeichnet, dass** sich das Modul (7) in unmittelbarer Nähe des Akkumulators (5) befindet, und dass die Verarbeitungseinheit (9) aus einem Mikroprozessor, einem Mikrocontroller oder einem Prozessor digitaler Signale besteht.

3. Elektrowerkzeugeinheit nach Anspruch 1, **dadurch gekennzeichnet, dass** zum Erfüllen der Aufgaben der Ladeverwaltung, Entladeverwaltung, des Ausgleichens der Ladung jeder Zelle (6), des Beurteilens und Anzeigens der Kapazität des Akkumulators (5) das Steuer- und Befehlsmodul (7) ständig die Messwerte der Spannung jeder Zelle (6), die den Akkumulator (5) bildet, auswertet.

4. Elektrowerkzeugeinheit nach Anspruch 3, **dadurch gekennzeichnet, dass** für einen Akkumulator (5), der aus n Zellen (6) in Serie gebildet ist, die Messwerte der Spannung jeder Zelle (6) durch eine elektronische Erfassungskette (10) geliefert werden, die im Wesentlichen aus n identischen analogen Modulen (11) besteht, die jeweils an den Klemmen der n Zellen (6) des Akkumulators (5) montiert und geeignet sind, die Spannung der jeweiligen Zelle (6) zu messen, wobei die Spannungswerte, die von jedem der n Module (11) gemessen werden, anschließend nacheinander über mindestens einen analogen Multiplexer (12) und nach Verstärkung durch eine angepasste Schaltung (13) zu einem Analog-/Digital-Eingangswandler (9') der digitalen Verarbeitungseinheit (9), die zu dem Steuer- und Befehlsmodul (7) gehört, geliefert werden.

5. Elektrowerkzeugeinheit nach Anspruch 4, **dadurch gekennzeichnet, dass** die analogen Spannungsmessmodule (11) jeweils für jede Zelle (6) eine Subtraktion der an ihrer positiven Klemme gemessenen Spannung von der an ihrer negativen Klemme gemessenen Spannung über eine elektronische differenzielle Schaltung mit Operationsverstärker (11'), die Widerstände (11") oder Eingangswiderstandselemente verwendet, ausführen.

6. Elektrowerkzeugeinheit nach Anspruch 5, **dadurch gekennzeichnet, dass** die elektronische differenzielle Schaltung mit Operationsverstärker (11') jedes Spannungsmessmoduls (11) Widerstände oder Eingangswiderstandselemente (11") mit einer Impedanz nahe oder gleich 1 MΩ derart umfasst, dass sehr geringe Leckströme, die zum Beispiel unter 1/20000-stel pro Stunde der Gesamtkapazität des Akkumulators (5) liegen, erhalten werden.

7. Elektrowerkzeugeinheit nach den Ansprüchen 3 bis 6, **dadurch gekennzeichnet, dass** die Messwerte der Spannung jeder Zelle (6) mit einer Messgenauigkeit von mindestens 50 mV geliefert werden.

8. Elektrowerkzeugeinheit nach Anspruch 7, **dadurch gekennzeichnet, dass** die Messgenauigkeit der Spannung von mindestens 50 mV durch Eichen der Elektronikkarte des Steuer- und Befehlsmoduls des Akkumulators (7) bei der Herstellung erzielt wird.

9. Elektrowerkzeugeinheit nach Anspruch 8, **dadurch gekennzeichnet, dass** das Eichen der Elektronikkarte bei der Herstellung darin besteht, durch Programmieren in die digitale Verarbeitungseinheit (9) für jedes Spannungsmessmodul (11) Fehlerkorrekturparameter einzuführen, die von der Messung einer oder mehrerer sehr präziser Bezugsspannungen abhängen, die man für diesen Eichvorgang an Stelle der normalerweise an den Klemmen jeder Zelle (6) gemessenen Spannungen setzt.

10. Elektrowerkzeugeinheit nach einem der Ansprüche 1 bis 9, **dadurch gekennzeichnet, dass** die Ausgleichaufgabe des Ladens der Zellen (6) untereinander von der digitalen Verarbeitungseinheit (9) verwaltet wird, die auf der Grundlage der Spannungsmesswerte jeder Zelle (6), und, falls erforderlich, für jede von ihnen die Entwicklung des Ladestroms über Dissipationsschaltungen auf der Basis elektronischer Schalter (14), die mit Widerstandselementen (14') assoziiert sind, steuert.

11. Elektrowerkzeugeinheit nach einem der Ansprüche 1 bis 10, **dadurch gekennzeichnet, dass** die Aufgabe der Verwaltung des Entladens darin besteht, ständig die Spannungsdaten jeder Zelle (6) über die digitale Verarbeitungseinheit (9) abzutasten, das Entladen zu unterbrechen, wenn diese erfasst, dass eine dieser Spannungen einer Zelle (6) den Mindestentladeschwellenwert, der vom Hersteller von Lithium-Ionen- und Lithium-Polymer-Elementen empfohlenen wird, erreicht hat, und das Entladen zu unterbrechen, indem ein Umschaltbauteil (15) des Entladens deaktiviert wird, was zum Stoppen des Werkzeugs (2) führt, und wobei zum Beispiel eine akustische oder visuelle Warnung aktiviert wird.

12. Elektrowerkzeugeinheit nach einem der Ansprüche 1 bis 11, **dadurch gekennzeichnet, dass** die Verwaltungsaufgaben des Ladens, des Beurteilens und Anzeigens der Kapazität des Akkumulators (5) und Überstromschutz während des Entladens laufend von der digitalen Verarbeitungseinheit (9) dank einer analogen Elektronikschaltung (16) zum Messen des Lade- und Entladestroms des Akkumulators (5) verwaltet werden.

13. Elektrowerkzeugeinheit nach Anspruch 12, **dadurch gekennzeichnet, dass** während der Verwaltungsaufgabe des Ladens, während die dritte Untereinheit, die den Auflader (4) bildet, an die zweite Untereinheit (3) im Bereich der Elektronikkarte des Steuer- und Befehlsmoduls (7) des Akkumulators (5) angeschlossen ist, das Ende des Ladens durch Öffnen eines Umschaltbauteils der Ladung (17) erzielt wird, das von der digitalen Verarbeitungseinheit (9) gesteuert wird, wenn einerseits die Einheit (9) über die analoge Elektronikschaltung (16) zum Messen des Ladestroms und Entladestroms ein Abfallen des Ladestroms bis zu einem empfohlenen Schwellenwert, zum Beispiel 50 mA, für den Akkumulator (5) erfasst, oder, andererseits die Temperatur des Akkumulators (5) einen zugelassenen Grenzwert, zum Beispiel 55 °C überschreitet, oder das Aufladen während einer Zeit dauert, die länger ist als ein vorgegebener Bruchteil der theoretischen Ladezeit, zum Beispiel etwa 20%.

14. Elektrowerkzeugeinheit nach Anspruch 12, sofern auf einen der Ansprüche 3 bis 9 rückbezogen, **dadurch gekennzeichnet, dass** die Aufgabe des Bewertens und Anzeigens der Kapazität des Akkumulators (5) von der digitalen Verarbeitungseinheit (9) verwaltet wird, wobei Letztere die Kapazität berechnet, indem sie ständig während des Aufladens und während des Gebrauchs des Werkzeugs einerseits die Information des Momentanladestroms und Momentanentladestroms des Akkumulators (5) berücksichtigt, die von der analogen Elektronikschaltung zum Messen des Lade- und Entladestroms (16) geliefert wird, und andererseits die Spannungsmesswerte jeder Zelle (6) und, nicht zwingend aber für eine präzise Berechnung, ihren bekannten mittleren Innenwiderstand.

15. Elektrowerkzeugeinheit nach einem der Ansprüche 1 bis 14, **dadurch gekennzeichnet, dass** die Aufgabe des Überstromschutzes während des Entladens des Akkumulators (5) beim Gebrauch des Werkzeugs, die dazu bestimmt ist, den Lithium-Ionen- oder Lithium-Polymer-Akkumulator vor einem verfrühten Altern oder übermäßigen Erhitzen zu schützen, entweder darin besteht, den Entladestrom bei sehr starkem impulsweisem Überschreiten des maximalen Entladestroms, der für den Akkumulator (5) zulässig ist, oder Überschreiten der für ihn zulässigen maximalen Grenztemperatur zu begrenzen, oder den Entladestrom in Abhängigkeit von der von dem Werkzeug während einer bestimmten gleitenden Zeit verbrauchten Energie zu begrenzen, wobei der Wert der Energie und die gleitende Zeit experimentell in Abhängigkeit von dem Werkzeug, seiner Verwendung und der für den Lithium-Ionen- oder Lithium-Polymer-Akkumulator (5), der zu der zweiten Untereinheit (3) gehört, angestrebten Lebensdauer vorbestimmt sind.

16. Elektrowerkzeugeinheit nach Anspruch 15, **dadurch gekennzeichnet, dass** die Entladestrombegrenzung von der digitalen Verarbeitungseinheit (9) verwaltet wird, indem ein Pulsbreitenmodulationsbefehl (MLI), der entweder direkt von der Einheit (9) oder von einem spezialisierten Bauteil über eine Steuerstufe (18) erzeugt wird, an ein Umschaltbauteil des Entladens (15), das zum Beispiel in der Form eines Bauteils des Typs N-Kanal-MOSFET hergestellt ist, angelegt wird.

17. Elektrowerkzeugeinheit nach einem der Ansprüche 1 bis 16, **dadurch gekennzeichnet, dass** die digitale Verarbeitungseinheit (9) dazu ausgebildet ist, das Anschließen des Aufladers (4) unter Spannung an den Akkumulator (5) über eine Spannungsmessung durch das Steuer- und Befehlsmodul (7) an der mindestens einen der Klemmen (20) der zweiten Untereinheit (3), die dazu bestimmt sind, an den Auflader (4) angeschlossen zu werden, zu erfassen.

18. Elektrowerkzeugeinheit nach Anspruch 17, **dadurch gekennzeichnet, dass** die Erfassungsfunktion des Anschließens des Aufladers (4) unter Spannung an den Akkumulator (5) mittels einer speziellen angepassten Messschaltung (19) ausgeführt wird, die es erlaubt, während das Werkzeug in Nichtverwendungsphase gelagert wird, durch Erfassen des Augenblicks, in dem mindestens eine Zelle (6) die von dem Hersteller empfohlene Mindestspannung erreicht hat, ein automatisches Aufladen des Akkumulators (5) auszulösen.

19. Elektrowerkzeugeinheit nach Anspruch 17 oder 18, **dadurch gekennzeichnet, dass**, wenn das Steuer- und Befehlsmodul (7) eine übermäßige oder unzureichende Spannung des Aufladers (4) im Bereich der entsprechenden Anschlussklemmen (20) der zweiten Untereinheit (3) erfasst, die digitale Verarbeitungseinheit (9), die diese Information auswertet, das Stoppen des Aufladens befiehlt und einen akustischen und/oder visuellen Alarm auslöst.

20. Elektrowerkzeugeinheit nach einem der Ansprüche 1 bis 19, **dadurch gekennzeichnet, dass** die Verwaltungsaufgabe der Informationen und Diagnosen darin besteht, in dem Speicher der digitalen Verarbeitungseinheit (9) Informationen zu speichern, die während der Verwendung des Werkzeugs erfasst werden, wie zum Beispiel: die Anzahl Aufladungen, die Zählung der Verwendungsstunden des Werkzeugs, die zeitliche Entwicklung der Kapazität des Akkumulators (5), die von dem Werkzeug oder Ähnlichem verbrauchte mittlere Energie, wobei diese Informationen über eine verdrahtete Verbindung (23), Funkfrequenz oder Infrarot zu einem separaten Betriebsendgerät, zum Beispiel des Typs Personalcomputer, elektronischer "Personal Assistant", GSM, das eventuell mit dem Internet verbünden ist, übertragen werden können.

21. Elektrowerkzeugeinheit nach einem der Ansprüche 1 bis 20, **dadurch gekennzeichnet, dass** das Steuer- und Befehlsmodul (7) des Akkumulators (5), das zu der zweiten Untereinheit (3) gehört, die eine aufladbare Stromquelle bildet, mit dem elektronischen Steuer- und Befehlsmodul des Betätigers (2) auf derselben Elektronikkarte assoziiert ist, gegebenenfalls mit Verwendung derselben digitalen Verarbeitungseinheit (9).

22. Elektrowerkzeugeinheit nach einem der Ansprüche 1 bis 20, **dadurch gekennzeichnet, dass** das elektronische Steuer- und Befehlsmodul (7) des Akkumulators (5) für jede Zelle (6) redundante Sicherheitsschaltungen zum Stoppen des Aufladens (21) umfasst, die geeignet sind, jeder einzelnen bei Überspannung einer Zelle (6) das allgemeine Stoppen des Aufladens zu befehlen, indem direkt ein Umschaltbauteil (17) des Aufladens deaktiviert wird, ohne die digitale Verarbeitungseinheit (9) heranzuziehen.

23. Elektrowerkzeugeinheit nach Anspruch 12 oder nach einem der Ansprüche 13 bis 22, sofern auf Anspruch 12 rückbezogen, **dadurch gekennzeichnet, dass** das elektronische Steuer- und Befehlsmodul (7) eine redundante Schaltung zum Stoppen des Entladens (21') umfasst, die geeignet ist, das Stoppen des Entladens bei Erfassen eines Entladestroms gleich oder größer einem maximal für den Akkumulator (5) zulässigen Wert durch die analoge elektronische Messschaltung (16) zu befehlen, indem direkt das Umschaltbauteil (15) des Entladens deaktiviert wird, ohne die digitale Verarbeitungseinheit (9) heranzuziehen.

24. Elektrowerkzeugeinheit nach einem der Ansprüche 1 bis 23, **dadurch gekennzeichnet, dass** die dritte Untereinheit (4), die den Auflader bildet, der zum Aufladen des Lithium-Ionen- oder Lithium-Polymer-Akkumulators (5) ausgebildet ist, eine Spannung mit einer Genauigkeit nahe 0,5 % und einen regulierten Strom erzeugt, die mittels einer speziellen Spannungs- und Stromregulierungsschaltung erzielt werden.

25. Elektrowerkzeugeinheit nach einem der Ansprüche 1 bis 24, **dadurch gekennzeichnet, dass** jede Funktionsuntereinheit (2, 3 und 4) in ihr eigenes Schutzgehäuse und/oder Greifgehäuse montiert ist, und untereinander in Paaren durch abnehmbare biegsame Kabel (20, 22') für den Energietransfer und das Übertragen der Befehls- und/oder Steuersignale zwischen den Untereinheiten (2, 3, 4) verbunden werden können.

## Claims

1. Portable self-contained electric power tool assembly such as, for example, secateurs, a chainsaw, fruit harvesting tool, corded lawnmower, pneumatic drill or similar, comprising at least three distinct functional sub-assemblies, namely a first sub-assembly forming an electrical actuator and generating the mechanical action of the tool, a second sub-assembly which can be carried by the user, forming an electrical energy source and essentially comprising a rechargeable electrochemical battery, and a third sub-assembly forming a charger which is able to recharge the battery in a controlled manner, **characterized in that**:
the second sub-assembly (3) is constituted, on the one hand, by a lithium-ion or lithium polymer electrochemical battery (5) formed by associating more than four cells (6) in series, each cell being composed of one element or of several elements in parallel, and, on the other hand, by a control and command module (7) for the battery (5), ensuring, over time and in a controlled manner, a maximum capacity of the battery and an optimum use of the tool;
the first sub-assembly (2) is subjected, while it is operating, to control by a current limiting system (8) which is suitable for preserving the lithium-ion or lithium polymer (5) electrochemical battery (5) from which it draws energy;
the third sub-assembly (4) consists at least of an electric power supply source, the voltage and the current of which are suitable for recharging the lithium-ion or lithium polymer battery (5), the electronic control and command module (7) for the battery (5) of the second sub-assembly (3) being in the form of an electronic board and comprising at least one digital processing unit (9), associated with a memory and with ancillary circuits, which are together able to fulfil all the tasks in the following group of tasks, formed by:
managing the charge,
managing the discharge,
balancing the charge of each cell (6),
evaluating and displaying the capacity of the battery (5),
overcurrent protection of the battery (5) while discharging, during use of the tool,
managing the tool during the storage phases,
managing the alarms,
managing and transmitting the collected information,
managing the diagnostics, and
the digital processing unit (9) automatically begins, when the electrical tool assembly is not charging and when it has not been used for a given period, for example 10 days, a task of managing the storage which consists in checking whether or not the residual capacity of the battery (5) is greater than the storage capacity recommended by the manufacturer of lithium-ion or lithium polymer elements, and, if the residual capacity is indeed greater than the storage capacity, in the digital processing unit (9) triggering an automatic discharge of the battery using resistive circuits (14, 14') which are connected in parallel on each cell (6), until the storage capacity is reached, and then in stopping all the electronic circuits while at the same time putting the processing unit (9) on standby in low-consumption mode and, if the capacity is less than the storage capacity, in making the digital processing unit (9) trigger an audio and/or visual alarm.

2. Electric tool assembly according to Claim 1, **characterized in that** the module (7) is located in immediate proximity to the battery (5) and **in that** the processing unit (9) consists of a microprocessor, a microcontroller or a digital signal processor.

3. Electric tool assembly according to Claim 1, **characterized in that**, with a view to accomplishing the tasks of managing the charge, of managing the discharge, of balancing the charge of each cell (6), of evaluating and of displaying the capacity of the battery (5), the control and command module (7) constantly utilizes the measured values of the voltage of each cell (6) composing the battery (5).

4. Electric tool assembly according to Claim 3, **characterized in that**, for a battery (5) formed of n cells (6) in series, the measured values of the voltage of each cell (6) are provided by an electronic acquisition chain (10) constituted mainly of n identical analogue modules (11), which are mounted at the respective terminals of the n cells (6) of the battery (5) and able to measure the voltage of the respective corresponding cell (6), the voltage values measured by each of the n modules (11) then being routed, one after another, via at least one analogue multiplexer (12) and after being amplified by a suitable circuit (13), towards an analogue-to-digital input converter (9') of the digital processing unit (9) forming part of the control and command module (7) .

5. Electric tool assembly according to Claim 4, **characterized in that** the analogue voltage measuring modules (11) perform, for each cell (6), a respective subtraction between the voltage measured at its positive terminal and the voltage measured at its negative terminal, via a differential electronic circuit with an operational amplifier (11') using resistors (11") or resistive input elements.

6. Electric tool assembly according to Claim 5, **characterized in that** the differential electronic circuit with an operational amplifier (11') of each voltage measuring module (11) comprises resistors or resistive input elements (11") with an impedance close to or greater than 1 Mohm, so as to obtain very low leakage currents, for example less than 1/20,000^{th} per hour of the total capacity of the battery (5).

7. Electric tool assembly according to Claims 3 to 6, **characterized in that** the measured values of the voltage of each cell (6) are delivered with a precision of measurement of at least 50 mV.

8. Electric tool assembly according to Claim 7, **characterized in that** the precision of measurement of the voltage of at least 50 mV is obtained by calibration during the manufacture of the electronic board of the control and command module for the battery (7).

9. Electric tool assembly according to Claim 8, **characterized in that** the calibration during the manufacture of the electronic board consists in introducing, by programming, into the digital processing unit (9), for each voltage measuring module (11), error correction parameters in accordance with the measurement of one or of several very precise reference voltages, which are substituted, for this calibration operation, for the voltages normally measured at the terminals of each cell (6).

10. Electric tool assembly according to any one of Claims 1 to 9, **characterized in that** the task of balancing the charge of the cells (6) with respect to one another is managed by the digital processing unit (9), which commands, on the basis of the measured voltage values of each cell (6), and if necessary for each one of them, change in the charge current via dissipator circuits based on electronic switches (14) associated with resistive elements (14').

11. Electric tool assembly according to any one of Claims 1 to 10, **characterized in that** the task of managing the discharge consists in constantly monitoring the data on the voltage of each cell (6) via the digital processing unit (9), in interrupting the discharge when the latter detects that one of these voltages of the cells (6) has reached the minimum discharge threshold recommended by the manufacturer of lithium-ion or lithium polymer elements, and in halting the discharge by deactivating a component (15) for switching the discharge, thus leading to stopping of the tool (2), and by activating, for example, an audio or visual warning signal.

12. Electric tool assembly according to any one of Claims 1 to 11, **characterized in that** the tasks of managing the charge, of evaluating and of displaying the capacity of the battery (5) and of overcurrent protection during discharge, are managed continuously by the digital processing unit (9) by virtue of an analogue electronic circuit (16) for measuring the charge and discharge current of the battery (5).

13. Electric tool assembly according to Claim 12, **characterized in that**, during the task of managing the charge, while the third sub-assembly forming a charger (4) is connected to the second sub-assembly (3) at the electronic board of the control and command module (7) for the battery (5), the end of the charge is obtained by opening a component for switching the charge (17), which is commanded by the digital processing unit (9) when, on the one hand, said unit (9) detects, via the analogue electronic circuit (16) for measuring the charge and discharge current, a drop in the charge current as far as a recommended threshold, for example of 50 mA, for the battery (5), or when, on the other hand, the temperature of the battery (5) exceeds a permitted limit value, for example 55°C, or else that the charge continues for a period which is longer than a given fraction of the theoretical charge time, for example about 20%.

14. Electric tool assembly according to Claim 12, in so far as it is dependent on one of Claims 3 to 9, **characterized in that** the task of evaluating and of displaying of the capacity of the battery (5) is managed by the digital processing unit (9), the latter calculating said capacity by constantly taking into account, during the charge and during use of the tool, on the one hand, the information on the instantaneous charge and discharge current of the battery (5), which is delivered by the analogue electronic circuit for measuring the charge and discharge current (16) and, on the other hand, the measured voltage values of each cell (6) and, not necessarily but for a more precise calculation, their known average internal resistance.

15. Electric tool assembly according to any one of Claims 1 to 14, **characterized in that** the task of overcurrent protection during the discharge of the battery (5) during use of the tool, intended to preserve the lithium-ion or lithium polymer battery from premature ageing or from excessive heating, consists either in halting the discharge current in the event of the maximum accepted discharge current for the battery (5) being greatly exceeded in a pulsed manner or of the maximum permitted limit temperature for the latter being exceeded, or in limiting the discharge current in accordance with the energy consumed by the tool during a certain sliding timeframe, knowing that the value of the energy and the sliding timeframe are predetermined experimentally in accordance with the tool, with its use and with the desired lifetime for the lithium-ion or lithium polymer battery (5) forming part of the second sub-assembly (3).

16. Electric tool assembly according to Claim 15, **characterized in that** the discharge current limitation is managed by the digital processing unit (9) by applying a pulse-width modulation (PWM) command, generated either directly by said unit (9), or by a specialized component, through a drive stage (18), with a component for switching the discharge (15) produced, for example, in the form of a component of the n-channel MOSFET type.

17. Electric tool assembly according to any one of Claims 1 to 16, **characterized in that** the digital processing unit (9) is able to detect the connection of the charger (4) live to the battery (5) via a voltage measurement by the control and command module (7) at at least one of the terminals (20) of the second sub-assembly (3), which are intended to be connected to said charger (4).

18. Electric tool assembly according to Claim 17, **characterized in that** the function of detecting the connection of the charger (4) live to the battery (5) is performed by means of a particular suitable measuring circuit (19), making it possible, as long as the tool is stored in a non-use phase, by detecting the instant at which at least one cell (6) has reached the minimum voltage recommended by the manufacturer, to thus trigger an automatic recharge of the battery (5).

19. Electric tool assembly according to Claim 17 or 18, **characterized in that**, when the control and command module (7) detects an excessive or insufficient voltage in the charger (4) at the corresponding connection terminals (20) for the second sub-assembly (3), the digital processing unit (9), which utilizes this information, commands stopping of the charge and triggers an audio and/or visual alarm.

20. Electric tool assembly according to any one of Claims 1 to 19, **characterized in that** the task of managing the information and the diagnostics consists in storing, in the memory of the digital processing unit (9), information acquired during use of the tool, such as, for example: the number of recharges, the count of the hours of use of the tool, the change in the capacity of the battery (5) over time, the average energy consumed by the tool or similar, this information being able to be transmitted, via a radiofrequency or infrared wired link (23), to a separate utilization terminal, for example of the personal computer, personal digital assistant or GSM type, possibly being able to be connected to the Internet.

21. Electric tool assembly according to any one of Claims 1 to 20, **characterized in that** the control and command module (7) for the battery (5) forming part of the second sub-assembly (3) forming a rechargeable electrical energy source is associated with the electronic control and command module for the actuator (2) on the same electronic board, where applicable using the same digital processing unit (9).

22. Electric tool assembly according to any one of Claims 1 to 20, **characterized in that** the electronic control and command module (7) for the battery (5) comprises, for each cell (6), redundant safety circuits for stopping charge (21), which are each individually able to command, in the event of overvoltage in a cell (6), general stopping of the charge by directly deactivating a component (17) for switching the charge without calling upon the digital processing unit (9).

23. Electric tool assembly according to Claim 12 or any one of Claims 13 to 22 in so far as it is dependent on Claim 12, **characterized in that** the electronic control and command module (7) comprises a redundant circuit for stopping discharge (21'), which is able to command stopping of the discharge in the event of a discharge current which is equal to or greater than a maximum acceptable value for the battery (5) being detected by the analogue electronic measuring circuit (16), by directly deactivating the component (15) for switching the discharge without calling upon the digital processing unit (9).

24. Electric tool assembly according to any one of Claims 1 to 23, **characterized in that** the third sub-assembly (4), forming a charger which is suitable for recharging the lithium-ion or lithium polymer battery (5), generates a voltage with a precision close to 0.5% and a regulated current, which are obtained by means of a specialized voltage and current regulating circuit.

25. Electric tool assembly according to any one of Claims 1 to 24, **characterized in that** each functional sub-assembly (2, 3 and 4) is mounted in its own protective and/or gripping housing, which can be connected to one another pairwise by disconnectable flexible cables (22, 22') for transferring energy and transmitting the command and/or control signals between said sub-assemblies (2, 3, 4).
